# EUROPEAN PATENT SPECIFICATION

(11) **EP 3 136 874 B1**
(45) Date of publication and mention of the grant of the patent: **03.06.2020**
(21) Application number: 15729225.1
(22) Date of filing: 27.04.2015
(51) Int. Cl.: A23G 1/50, A23G 3/50

(54) **CONFECTIONERY PRODUCT**
KONFEKT
PRODUIT DE CONFISERIE

(30) Priority: 02.05.2014 GB 201407778
(43) Date of publication of application: 08.03.2017
(73) Proprietor: Kraft Foods Schweiz Holding GmbH, 6300 Zug (CH)
(72) Inventor: GUSTAV, Thorsten, Birmingham West Midlands B30 2LU (GB); CARVAJAL, Ricardo, Birmingham West Midlands B30 2LU (GB); BUFTON, Andrew Christopher, Birmingham West Midlands B30 2LU (GB); KONTOZOGLOU, Chrysanthi, Birmingham West Midlands B30 2LU (GB); CORAGLIA, Diego, Birmingham West Midlands B30 2LU (GB)
(74) Representative: Ward, David Ian
(86) International application number: PCT/IB2015/053055
(87) International publication number: WO 2015/166400

(56) References cited:
- EP-A2- 0 126 022
- WO-A1-88/04897
- WO-A1-2014/044289
- WO-A1-2014/182268
- WO-A1-2015/019252
- WO-A2-2012/074266
- BE-A1- 828 115
- BE-A6- 1 009 616
- CH-A- 134 357
- DE-U1-202010 003 662
- GB-A- 531 386
- GB-A- 612 029
- GB-A- 2 219 724
- GB-A- 2 321 213
- GB-A- 2 502 532
- US-A1- 2010 003 374

## Description

The present invention relates to a confectionery product, in particular a chocolate product such as a segmented chocolate bar. More specifically, the invention relates to a chocolate bar more resistant to damage.

Confectionery products such as chocolate bars are often segmented in order to allow the bar to be broken into bite-sized pieces. Such bars take the form of a strip or slab with a number of raised portions or 'tablets' connected by a raft of chocolate. The raft is easily broken and formed from the same material as the bar. Bars of this manner are typically formed in a mould of suitable shape to simultaneously produce the tablets and raft.

When producing a filled chocolate bar, for example, Cadbury Dairy Milk with Caramel®, it is required to first produce a chocolate outer shell. The shell is then filled before being backed off'. The raft connecting the raised portions or tablets is thus formed by a combination of the original shell, and the additional chocolate layer deposited during backing off.

Segmented confectionery products are highly popular, and formed into pleasing shapes in order to provide an enjoyable customer experience and promote sale and consumption. Typical products have a series of raised portions projecting upwards from the chocolate raft, which acts as both lower edge to each segment and as a frangible connector for connecting adjacent segments. Designs vary in size, shape and pattern, with some designs having irregular shaped segments or tablets in order to be more visually attractive to customers and provide an original consumer experience. Such designs can be found in a range of products manufactured by the present Applicant, for example Cadbury Marvellous Creations®.

Confectionery products in the form of a segmented bar or plate are described in WO 2014/044289, WO 2015/019252, GB 2321213, GB 531386, GB 612029, GB 2219724, WO 2012/074266, DE 202010003662U1, BE 1009616, BE 828115, CH 134357, US 2010/003374, GB 2502532, EP 0126022 and WO 1988/004897. WO 2014/182268 describes a mold for producing a food product with multiple portions.

It is a known problem with confectionery that products become damaged or broken during production or transport. For example, the product may undergo high stresses during de-moulding or poor handling of the final product during shipping. Products broken during manufacture are often wasted as part of quality control, whereas products broken as a result of transit are less desirable to consumers and may result in increased wastage at the point of sale. This is especially true of segmented products where the frangible connectors are prone to breaking, and even more so in products where an irregular pattern or design creates weaknesses in the final bar. It is important to keep wastage to an absolute minimum in order to maximise profitability.

The present invention seeks to provide a confectionery product which overcomes at least one of the above problems, or provides a useful alternative. More specifically, the present invention seeks to provide a confectionery product that is less susceptible to damage.

According to a first aspect of the invention, there is provided a confectionery product in the form of a segmented bar comprising:
a substantially planar raft and a series of discrete raised portions projecting therefrom and separated by channels thereby defining a plurality of segments, wherein the segments are of non-uniform size or shape, wherein the raft is of non-uniform thickness, and wherein the raft is of greater than average thickness in a position prone to breakage (Z).

As would be readily understood, a 'segment' as used herein refers to a single discrete raised portion and the part of the raft from which it projects. The segments are thus connected by the raft. Where the raft connects the segments, it may form a frangible portion, for example to allow a consumer to easily break the confectionery product into individual segments.

In one embodiment the confectionery product is produced from a confectionery material comprising any suitable material, for example: chocolate, candy, biscuit, wafer, cake or any combination thereof. The discrete raised portion and the raft may be produced from the same material, or they may differ. The raft may be formed integrally with the discrete raised portions. For example, both raft and discrete raised portion may comprise a single continuous material, e.g. chocolate. Alternatively, the discrete raised portion may comprise a first material and the raft may comprise a second material.

The raft may comprise a base layer for the confectionery product. In one embodiment, the upper surface of the raft forms the lower surface of the channels. The channels are defined between and/or around the discrete raised portions and have a depth equal to the height of the uppermost point of the discrete raised portions relative to the raft. It would be readily understood that where the raft is of non-uniform thickness, the depth of the channels is also non-uniform. For example, where the raft is thicker than average, the channel will be shallower by an equivalent amount. It would be readily understood that the depth of the channel relative to a single discrete raised portion may be non-constant, depending on the variation in raft thickness. For example, the channel may have a first depth at a first position adjacent the discrete raised portion, and a second depth at a second position adjacent the same discrete raised portion. The first and second positions may be on different, or the same, sides of the segment. Where the segment is formed from a continuous material, i.e. the raft and discrete raised portion are continuous, the thickness of the raft relative to the discrete raised portion is extrapolated from the depth of the channels.

It would be readily understood that the discrete raised portions may be on either side of (e.g. above and below) the raft. Where references to height and/or depth have been made, it would be readily understood that this means the height relative to the raft on either side.

The raft may vary in thickness across two axes, for example the length and width of the bar.

The segments are of non-uniform size or shape. The segments may be arranged in a random, non-repeating pattern. Alternatively, the segments may all be arranged in a regular repeating pattern. In one embodiment, the segments may comprise a combination of uniform and non-uniform segments, e.g. the segments may be in one of two or more different sizes or shapes. In one embodiment, the segments may be arranged in a combination of repeating regular patterns and random non-repeating patterns. For example, the segments may be arranged in a first regular pattern comprising a shape, and the segments within the shape may be arranged in a random, non-regular pattern, or vice versa.

The channels between the discrete raised portions may be of varying widths.

The raft is of greater than average thickness in a position prone to breakage. It would be readily understood that positions prone to breakage are positions that experience high stress when a force is applied to the bar.

Additionally, the raft may be of lower than average thickness in a position not prone to breakage. It would be readily understood that positions not prone to breakage are positions that experience low stress when a force is applied to the bar.

The stress may be more evenly distributed across the confectionery product, compared to a bar with a raft of uniform thickness and the same weight. In one embodiment, the stress is evenly distributed across the confectionery product. It would be readily understood, that by distributing the stress more evenly over the bar, the product is less prone to breakage, and is thus stronger.

The confectionery product may be at least 5% stronger than a comparable bar with a raft of uniform thickness and the same weight. Alternatively, the confectionery product may be at least 5%, 10%, 15%, 20%, 25% or 30% stronger than a comparable bar with a raft of uniform thickness and the same weight. Alternatively, the confectionery product may have the equivalent strength as a comparable bar with a raft of uniform thickness, but a lesser weight. The bar may be 5%, 10%, 15%, 20%, 25% or 30% lighter than a comparable bar with a raft of uniform thickness and equal strength.

The confectionery product may be a filled confectionery product. For example, one or more of the segments may be hollow and filled with a filling material. Where the discrete raised portions and the raft are formed from first and second materials respectively, the filling material may comprise a third material. The filling material may comprise any suitable filling material, for example, chocolate, caramel, toffee, praline, biscuit, cake, nuts, fruit, cream, icing or any other suitable filling material or combination thereof. The segments may all be filled, or some may be filled. The filled segments may all comprise the same filling material, or the different segments may comprise any number of further filling materials or combinations thereof.

According to a second aspect of the invention, there is provided a mould for producing a confectionery product as described above.

According to a third aspect of the invention, there is provided a process for producing a segmented confectionery product comprising:
a) creating a prototype segmented confectionery product design;
b) creating a stress profile of said prototype confectionery product design;
c) creating a modified design by increasing thickness of the raft in areas of high stress and thus prone to breakage in the prototype design; and
d) producing a confectionery product according to the modified design.

The process may further include in step c) decreasing the thickness of the raft in areas not prone to breakage.

In one embodiment, the modified design may have the same weight as the prototype design. For example, the weight increase due to thickening the raft in areas prone to breakage may be equivalent to the decrease in weight due to decreasing the thickness in areas non-prone to breakage.

It would be readily understood that the prototype design in step a) may comprise a physical product and/or it may comprise a computer model or simulation. Similarly, the step of creating a stress profile in b) may be carried out by analysis of a physical prototype, and/or by computer modelling or simulation.

The process may further include the step of producing a mould for moulding a confectionery product according to the modified design.

Also described is a mould for producing the modified design.

An embodiment of the invention will now be described, by way of example, with reference to the following drawings in which:
Figure 1 is a segmented chocolate bar as known in the prior art;
Figure 2 is a plan view of a segmented chocolate bar with an irregular non-repeating pattern;
Figure 3 is an edge on projection of the segmented bar of Figure 2;
Figure 4 is a cross section through the segmented bar of Figure 2 in the line X-X;
Figure 5 is a comparative confectionery product viewed from the side according to a related aspect described but not claimed herein;
Figure 6 is a close up projection of Section 2 of Figure 5;
Figure 7 is an alternative embodiment of a confectionery product according to a first aspect of the invention;
Figure 8 is an edge on projection of the confectionery product shown in Figure 7 compared to the conventional product of Figure 2;
Figure 9 is a stress profile of the conventional confectionery product of Figure 2; and
Figure 10 is a stress profile of a confectionery product according to the first aspect of the invention.

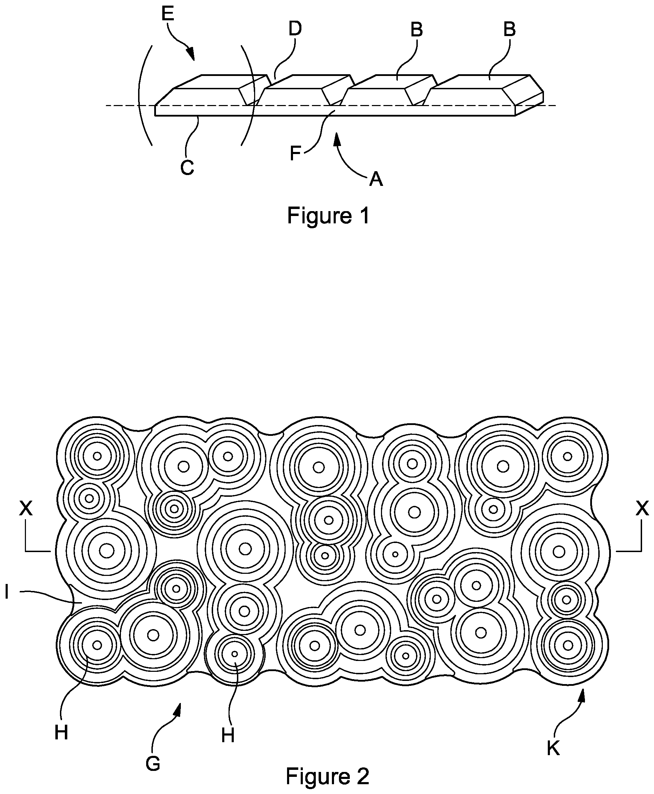

Turning to Figure 1, there is shown a confectionery product A in the form of a bar as commonly manufactured in the art. Confectionery product A comprises a series of four discrete raised portions B conjoined by a raft C, formed integrally in the bar. The thickness of raft C is denoted by the dashed line, and is uniform across its length and width. The discrete raised portions B and the portions of the raft C associated therewith form segments E. Where the raft C joins the segments E it forms a frangible bridge F.

The discrete raised portions B are uniform in size and shape and are separated by channels D, all of which have the same depth and width, since the thickness of the raft and the height and shape of the discrete raised portions B is constant. Thus, the segments E are uniform. When a customer wishes to eat said product A, then each segment E is simply broken off by applying a force over the frangible bridge F.

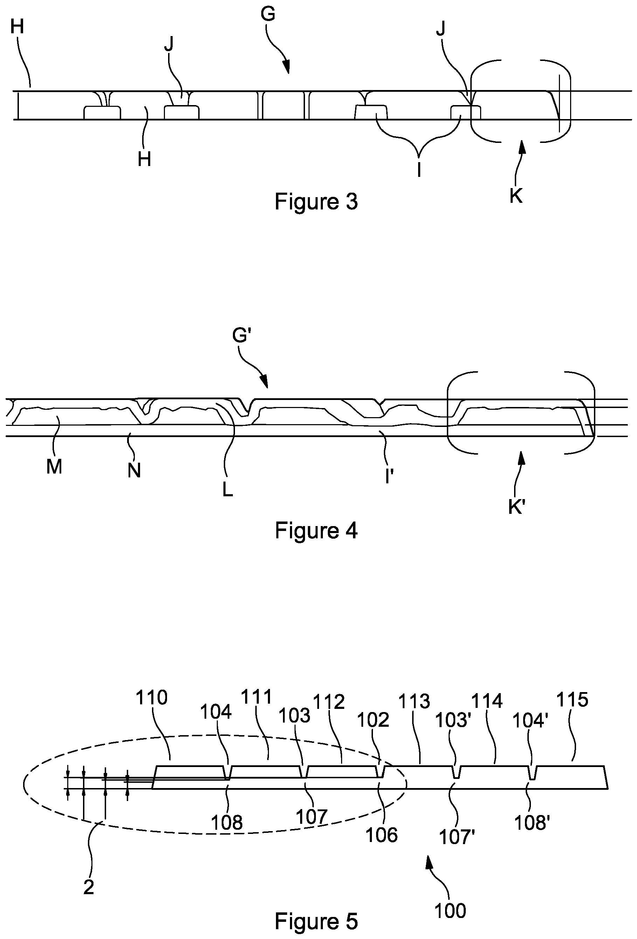

Turning now to Figures 2 and 3 there is shown a confectionery product G in the form of a bar as may be manufactured in the art. Product G comprises a number of irregularly shaped segments H connected by a raft I, formed integrally in the bar. The segments H are separated by various channels J, which vary in size and shape but are of uniform depth. A customer eats product G in the conventional manner by applying a force across the raft I in order to break off a segment K.

Figure 4 shows a cross section through the confectionery product of Figures 2 and 3 in the line X-X wherein the product is a filled confectionery product. The bar G' is produced by first forming a shell L with a number of segments K'. The segments K' are then filled with a filling M and then backed off. The raft I' is formed from both the shell L and the backed off layer N which seals the individual segments K'. The bar is inverted so that the raft I' forms the base. The bar G' is consumed in the manner described above.

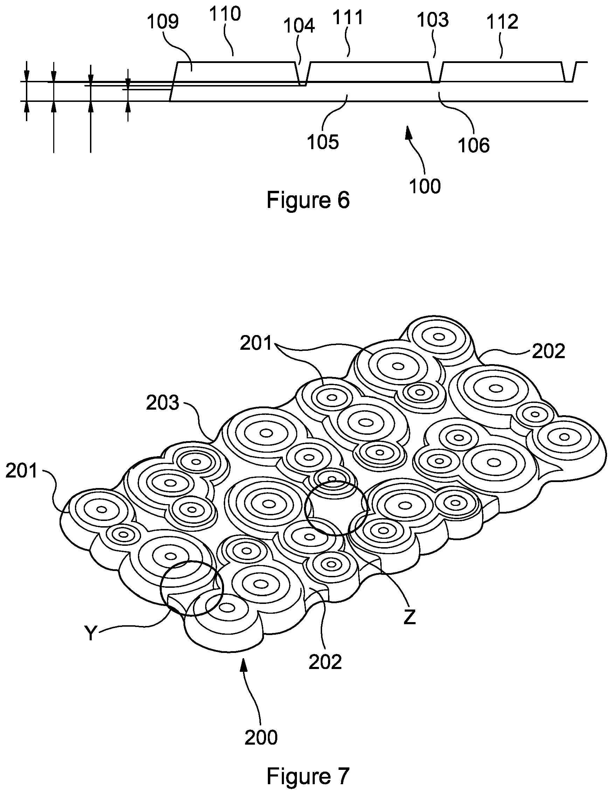

Figures 5 & 6 show a comparative confectionery product 100 in the form of a segmented bar. The bar is formed from a series of six regularly shaped segments 110-115, separated by five channels 102, 103, 103', 104, and 104'. The middle segments 112, 113 are separated by central channel 102. Moving outwardly therefrom in both directions, the next channels 103, 103' separate the segments 112, 111 and 113, 114 respectively. Moving outwardly again, the channels 104, 104' separate the segments 111, 110 and 114, 115 respectively. The segments 110-115 are formed by a combination of discrete raised portions 109 and raft 105.

Where the raft 105 is exposed between the segments 110-115, by way of the channels 102, 103, 103', 104 and 104', it forms frangible portions 106, 107, 107', 108 and 108'.

The segments 110-115 are of regular size and shape (i.e. they are all the same size and shape except for the variation in raft thickness as described herein), however the channels 102, 103, 103', 104 and 104' and frangible portions 106, 107, 107', 108 and 108' vary in depth/thickness. The central frangible portion 106 has the greatest thickness, of approximately 5mm; moving outwards, the next frangible portions 107, 107' have a thickness of approximately 4.79mm; and moving outwardly the final frangible portions 107, 107' have the smallest thickness of 4.12mm. The thicker portions are thus stronger than the thinner portions, which are easier for a consumer to break. When a force is applied across the bar, for example, by the two ends, the chance of one of the two terminal segments 110, 115 being broken from the bar is increased. After the two weakest frangible portions 107, 107' are broken, the second weakest frangible portions 106, 106' are broken, and so on.

The advantage of the arrangement of the invention is that it prevents and/or lessens accidental breakage during manufacture and transit. Should the product shown in Figure 1 be subjected to a force, for example during de-moulding or heavy handling during transit, it is most likely to break in the middle. A force applied across the length of the bar will cause the greatest stress in a central portion due to the additional leverage of the length of the bar. Therefore by thickening the central frangible portion 105, the central portion is strengthened and thus less likely to break at this position.

In order to maintain the product weight unchanged, it is necessary to remove material from elsewhere in the bar to compensate. While the bar's height, width or length could be reduced to accommodate the additional material in the centre, this may discourage consumers who perceive a reduction in the exterior dimensions as a reduction in total volume. Thus, the remaining frangible portions 107, 107', 108, 108' are adjusted to accommodate the increase in thickness in the centre, by reducing the thickness towards each end. The result is a confectionery product that has the same weight as a conventional product, but that distributes stress more equally over its length and thus is stronger and more resistant to accidental breaking. Such a design reduces wastage during production and has a higher likelihood of reaching its destination undamaged.

The comparative example shown in Figure 5 & 6 comprises a series of segments in a single strip. Confectionery products such as these, especially the larger varieties, are often produced with segments uniformly arranged in 2 axes, i.e. a grid. It is the intention of the present invention that it may be applied to any such a bar, so that the thickness of the frangible portions varies not only with position along a first axis, but also with position along a second, perpendicular axis.

Figure 7 shows a second embodiment of the present invention with regard to a first aspect of the invention. Shown is a confectionery product 200 comprising a series of irregular segments 201, in the shape of conjoined circles. The shape is designed to be aesthetically pleasing to the consumer and encourage purchase of the product, although the irregular shapes are not limited to those shown. Any irregular segmented shape is sufficient.

The segments 201 are connected by a raft 202 and separated by corresponding channels 203. The size and shape of the frangible areas in raft 202 is dependent on the size and shape of the irregular segments 201. In this particular embodiment the frangible area is a single continuous frangible area, although the irregular shape could quite simply form multiple frangible areas on a single bar.

The thickness of the raft 202 varies across the surface of the bar in order to counter any stresses imparted on the product. Due to the irregular shape of the segments 201, the final product is substantially weaker than average in certain locations, due to high stresses being imparted on these areas. The bar is therefore more prone to breaking in these positions of weakness. The weakness is an inherent problem with irregularly shaped and spaced segments, since the irregularity of the segments increases the stress imparted in certain areas when a force is applied to the bar.

The raft 202 is therefore thickened in areas subject to high stress conditions, such as that shown by area Z, and reduced in areas subject to low stress conditions, such as that shown by Y. The change in thickness follows a smooth gradient so as to mirror the curves of the product and to provide an attractive product.

By thickening the areas subject to high stress, the bar is able to more easily distribute stress across a larger area of the bar, thus increasing the strength of the bar and decreasing the likelihood of the bar breaking during manufacture or transit.

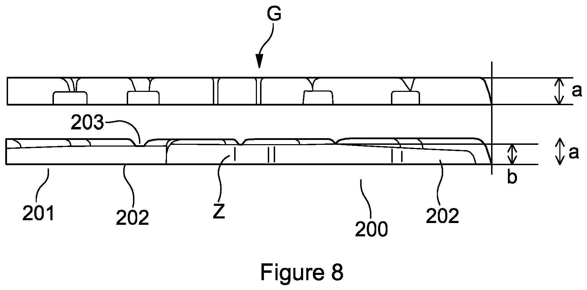

Turning now to Figure 8 there is shown the bar 200 of Figure 7 in profile compared to a conventional bar E. Both bars have the same height a, however as is clear from this projection the raft 202 of bar 200 is uneven in thickness. Thus the thickness b of the raft 202 at its thickest point Z can clearly be seen to be greater than at a thinner point Y.

According to the second aspect of the invention, there is provided a method for producing a confectionery product as described previously.

In the first step a prototype design of confectionery product is developed, and a prototype produced. The prototype can be either a physical product or it may also be a computer model or simulation.

The second step of the process is to test the prototype under a force in order to produce a stress profile of the prototype. As above, this can be done either by applying a force across a prototype product, or by computer modelling of the product taking into account the material properties of the chosen confection. The stress profile is thus analysed to identify points and regions in the chocolate raft wherein the stress in the material is higher than the average amount across the bar. At this stage it is also worthwhile identifying particularly stable areas, i.e. areas wherein the stress in the product is lower than the average amount.

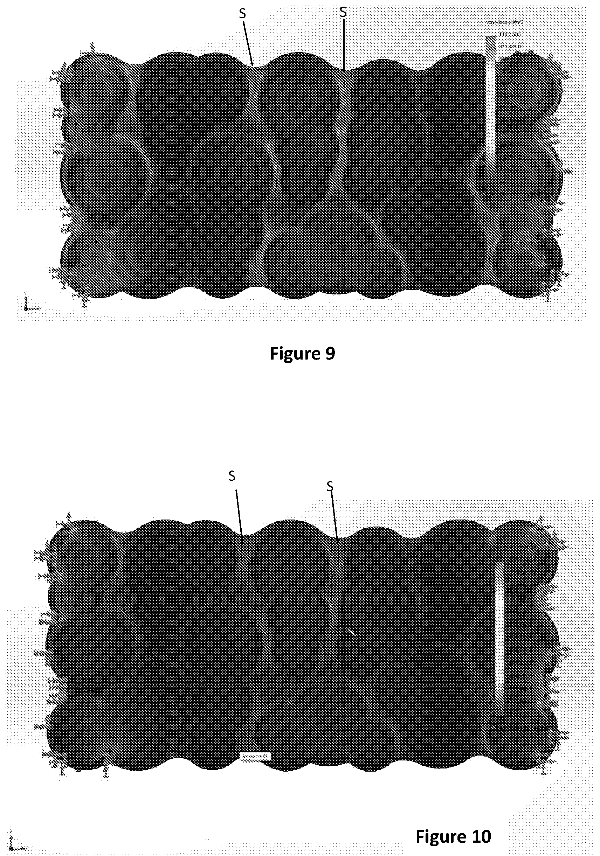

Figure 9 shows an exemplary stress profile of the confectionery product in Figure 2. A force is applied across each terminal end of the bar and the stress analysed. The high stress areas S (shown by the lightened areas) are unevenly distributed around the middle of the bar.

The next step is to modify the prototype and/or model design in view of the stress profile. The areas of high stress are thickened to provide a stronger section. The areas of low stress are thinned in order to compensate for the additional material added to the high stress areas. The amount added and the amount removed should ideally be equal in order to maintain the final product weight. Where the prototype is a computer model it is relatively simple to produce multiple modified designs and then select the strongest or most suitable design.

Figure 10 shows an exemplary stress profile of the confectionery product in Figure 7. The areas S that were prone to high stress in Figure 9 have been labelled for comparison. It is clear from the darker colour of these areas that a lower amount of stress is experienced by the material in these locations. The confectionery product has undergone the same test as in Figure 9, except the modified shape is more able to distribute the stress and is thus more resilient to damage.

A mould according to the modified design or chosen modified design is thus produced and the bar manufactured to the modified design in the conventional manner. Using this method, it has been possible to increase the strength of the final product by at least 30%.

If desired, the stress profile test can be repeated on the modified design in order to ensure that the product is more suitable than the original design. The above steps can be repeated as necessary until the optimum design has been reached.

## Claims

1. A confectionery product (100) in the form of a segmented bar comprising:
a substantially planar raft (105) and a series of discrete raised portions projecting therefrom and separated by channels (102-104, 103'-104') thereby defining a plurality of segments (110-115), wherein
the segments (110-115) are of non-uniform size or shape,
wherein the raft (105) is of non-uniform thickness, and
wherein the raft (105) is of greater than average thickness in a position prone to breakage (Z).

2. A confectionery product according to claim 1, wherein the raft (105) varies in thickness across two axes.

3. A confectionery product according to either of the preceding claims, wherein the raft (105) is of lower than average thickness in a position not prone to breakage (Y).

4. A confectionery product according to any one of the preceding claims wherein the segments (110-115) are arranged in a random, non-repeating pattern.

5. A confectionery product according to any one of the preceding claims wherein the channels (102-104, 103'-104') between the discrete raised portions are of varying width or widths.

6. A confectionery product according to any one of the preceding claims wherein the stress is evenly distributed across the bar.

7. A confectionery product according to any one of the preceding claims that is up to 30% stronger than a comparable bar with a raft of uniform thickness and the same weight or that is the equivalent strength as a comparable bar with a raft of uniform thickness, but a lesser weight.

8. A confectionery product according to any one of the preceding claims comprising chocolate and/or wherein one or more of the segments (110-115) is hollow and filled with a filling material.

9. A mould for producing a confectionery product according to any one of the preceding claims.

10. A process for producing a segmented confectionery product comprising:
a) creating a prototype segmented confectionery product design;
b) creating a stress profile of said prototype confectionery product design;
c) creating a modified design by increasing thickness of the raft in areas of high stress and thus prone to breakage in the prototype design; and
d) producing a confectionery product according to the modified design.

11. A process for producing a segmented confectionery product according to claim 10, wherein step c further comprises decreasing the thickness of the raft (105) in areas not prone to breakage.

12. A process for producing a segmented confectionery product according to claim 11, wherein the weight of the modified design is the same as the weight of the prototype design.

13. A process for producing a segmented confectionery product according to any one of claims 10 to 12, further comprising the step of producing a mould for moulding a confectionery product according to the modified design.

## Patentansprüche

1. Konfektprodukt (100) in der Form eines segmentierten Riegels, Folgendes beinhaltend:
eine im Wesentlichen planare Platte (105) und eine Reihe von diskreten erhabenen Abschnitten, welche sich davon weg erstrecken und durch Kanäle (102-104, 103'-104') getrennt sind, wodurch eine Vielzahl von Segmenten (110-115) definiert wird, wobei
die Segmente (110-115) eine nicht einheitliche Größe oder Form besitzen,
wobei die Platte (105) eine nicht einheitliche Dicke aufweist, und
wobei die Platte (105) eine größere als durchschnittliche Dicke in einer zum Bruch (Z) tendierenden Position aufweist.

2. Konfektprodukt nach Anspruch 1, bei welchem die Dicke der Platte (105) über zwei Achsen variiert.

3. Konfektprodukt nach einem der beiden vorhergehenden Ansprüche, bei welchem die Platte (105) eine geringere als durchschnittliche Dicke an einer Position aufweist, welche nicht zum Bruch (Z) tendiert.

4. Konfektprodukt nach einem der vorhergehenden Ansprüche, bei welchem die Segmente (110-115) in einem willkürlichen, sich nicht wiederholenden Muster angeordnet sind.

5. Konfektprodukt nach einem der vorhergehenden Ansprüche, bei welchem die Kanäle (102-104, 103'-104') zwischen den diskreten, erhabenen Abschnitten eine variierende Breite oder variierende Breiten aufweisen.

6. Konfektprodukt nach einem der vorhergehenden Ansprüche, bei welchem die Spannung einheitlich über den Riegel verteilt ist.

7. Konfektprodukt nach einem der vorhergehenden Ansprüche, welches bis zu 30 % stärker als ein vergleichbarer Riegel mit einer Platte von einheitlicher Dicke und von gleichem Gewicht ist oder welches eine Stärke auweist, welche gleichwertig mit einem vergleichbaren Riegel mit einer Platte von einheitlicher Dicke, jedoch mit einem geringeren Gewicht ist.

8. Konfektprodukt nach einem der vorhergehenden Ansprüche, beinhaltend Schokolade und/oder wobei eines oder mehrere der Segmente (110-115) hohl ist und mit einem Material gefüllt ist.

9. Form zum Herstellen eines Konfektprodukts nach einem der vorhergehenden Ansprüche.

10. Verfahren zum Herstellen eines segmentierten Konfektprodukts, Folgendes beinhaltend:
a) Erstellen eines Prototypen-Designs eines Konfektprodukts;
b) Erstellen eines Spannungsprofils des Prototypen-Designs eines segmentierten Konfektprodukts;
c) Erstellen eines modifizierten Designs durch Erhöhen einer Dicke der Platte in Bereichen mit hoher Spannung, welche folglich zum Bruch in dem Prototypen-Design tendieren; und
d) Herstellen eines Konfektprodukts gemäß dem modifizierten Design.

11. Verfahren zum Herstellen eines segmentierten Konfektprodukts nach Anspruch 10, bei welchem Schritt c zudem Verringern der Dicke der Platte (105) in nicht zum Bruch tendierenden Bereichen beinhaltet.

12. Verfahren zum Herstellen eines segmentierten Konfektprodukts nach Anspruch 11, bei welchem das Gewicht des modifizierten Designs dasselbe ist wie das Gewicht des Prototypen-Designs.

13. Verfahren zum Herstellen eines segmentierten Konfektprodukts nach einem der Ansprüche 10 bis 12, zudem beinhaltend den Schritt des Herstellens einer Form zum Formen eines Konfektprodukts gemäß dem modifizierten Design.

## Revendications

1. Produit de confiserie (100) sous la forme d'une barre segmentée comprenant :
une plaque sensiblement plate (105) et une série de parties surélevées distinctes faisant saillie à partir de celle-ci et séparées par des canaux (102-104, 103'-104') en définissant ainsi une pluralité de segments (110-115), dans lequel
les segments (110-115) sont d'une taille ou d'une forme non-uniforme
la plaque (105) ayant une épaisseur non uniforme, et
la plaque (105) ayant une épaisseur supérieure à l'épaisseur moyenne en un endroit sujet à une rupture (Z).

2. Produit de confiserie selon la revendication 1, dans lequel l'épaisseur de la plaque (105) varie sur deux axes.

3. Produit de confiserie selon l'une des revendications précédentes, dans lequel la plaque (105) a une épaisseur inférieure à une épaisseur moyenne en un endroit non sujet à une rupture (Y).

4. Produit de confiserie selon l'une quelconque des revendications précédentes, dans lequel les segments (110-115) sont agencés selon un motif aléatoire, non répétitif.

5. Produit de confiserie selon l'une quelconque des revendications précédentes, dans lequel les canaux (102-104, 103'-104') entre les parties surélevées distinctes ont une largeur ou des largeurs variables.

6. Produit de confiserie selon l'une quelconque des revendications précédentes, dans lequel l'effort est réparti de façon homogène d'un bout à l'autre de la barre.

7. Produit de confiserie selon l'une quelconque des revendications précédentes, qui est jusqu'à 30 % plus résistant qu'une barre comparable comportant une plaque d'une épaisseur uniforme et ayant le même poids ou qui présente une résistance équivalente à une barre comparable comportant une plaque d'épaisseur uniforme, mais ayant un poids inférieur.

8. Produit de confiserie selon l'une quelconque des revendications précédentes, comprenant du chocolat et/ou dans lequel un ou plusieurs des segments (110-115) est creux et est rempli avec une matière de remplissage.

9. Moule pour produire un produit de confiserie selon l'une quelconque des revendications précédentes.

10. Procédé de production d'un produit de confiserie segmenté comprenant :
a) la création d'un prototype de modèle de produit de confiserie segmenté,
b) la création d'un profil de contrainte du dit prototype de modèle de produit de confiserie,
c) la création d'un modèle modifié en augmentant l'épaisseur de la plaque dans des zones de contrainte élevée et ainsi sujettes à une rupture dans le prototype de modèle, et
d) la production d'un produit de confiserie selon le modèle modifié.

11. Procédé de production d'un produit de confiserie segmenté selon la revendication 10, dans lequel l'étape c comprend en outre la réduction de l'épaisseur de la plaque (105) dans des zones non sujettes à une rupture.

12. Procédé de production d'un produit de confiserie segmenté selon la revendication 11, dans lequel le poids du modèle modifié est le même que le poids du prototype de modèle.

13. Procédé de production d'un produit de confiserie segmenté selon l'une quelconques des revendications 10 à 12, comprenant en outre l'étape de production d'un moule pour mouler un produit de confiserie selon le modèle modifié.
